# EUROPEAN PATENT SPECIFICATION

(11) **EP 3 546 305 B1**
(45) Date of publication and mention of the grant of the patent: **05.01.2022**
(21) Application number: 19165097.7
(22) Date of filing: 26.03.2019
(51) Int. Cl.: B60T 3/00, A62B 99/00, B60P 3/077, F16M 11/22

(54) **MULTI-FUNCTIONAL STEP CHOCK AND METHODS FOR STABILISING VEHICLE OR OTHER OBJECT**
MULTIFUNKTIONALER STUFENKEIL UND VERFAHREN ZUR STABILISIERUNG VON FAHRZEUGEN ODER ANDEREN OBJEKTEN
CALE DE MARCHE MULTIFONCTIONNELLE ET PROCÉDÉS DE STABILISATION D'UN VÉHICULE OU AUTRE OBJET

(30) Priority: 30.03.2018 US 201815942422
(43) Date of publication of application: 02.10.2019
(73) Proprietor: Red Rescue, LLC, Renton, WA 98059 (US)
(72) Inventor: RANDALL, Steve, Renton, WA 98059 (US)
(74) Representative: Murgitroyd & Company

(56) References cited:
- EP-A1- 2 957 470
- DE-A1- 2 629 543
- DE-A1-102015 214 852
- ES-A1- 2 387 162
- GB-A- 2 326 394
- KR-B1- 101 365 513
- US-A1- 2017 043 751
- US-A1- 2017 362 069
- US-B2- 7 621 504

## Description

### Field of the invention

The field of the invention is generally directed to a step chock apparatus. More particularly, the invention is directed to a step chock apparatus that may be used to assist in the stabilizing of vehicles for reasons such as to facilitate access to occupants by rescue workers, whereby the occupants are trapped inside the vehicle or accident victims are trapped underneath the vehicle.

### Background

Following an accident, it is important to stabilize the vehicles and create a work area that is safe for first responders who attempt to assist any victims or trapped parties within or underneath the vehicles. This is because of various changing conditions including vehicle sliding, rolling, falling, or the driver regaining consciousness and naturally trying operate the vehicle's controls, which could lead to vehicle instability. Elements such as ground effects, low ground clearance, and larger wheels make the initial stabilization of these types of vehicles a very challenging endeavor. Most popular methods of stabilizing the vehicle currently are step chocks, cribbing, or using other cars by marrying two or more vehicles together. However, there are many disadvantages and difficulties with the existing options for stabilizing a vehicle. Additionally, using other multiple vehicles does have its benefits, but is not always practical.

Cribbing involves stacking multiple elongated pieces of wood laid on the road or ground and crossed until they are assembled against the underside of the car or other load. Sometimes a rescuer or first responder will use a mallet or other similar device to hammer in the cribbing to fill the space between the cribbing and the vehicle. Placing cribbing to properly stabilize a vehicle can be a dangerous and time-consuming process where if one wooden block is not properly in place the whole system will fail and the vehicle will not properly be stabilized. The nature of cribbing is to create a structure that will resist a collapse with multiple independent like components that are held in place by gravity, unfastened to each other.

This system requires the load to collapse in a perpendicular direction for the cribbing to be maintain stability and continue to support load. In the case of high clearance vehicles, such as for example, SUV's, trucks, and buses, the cribbing needs to be stacked with many levels to span the distance between the ground and the vehicle. The higher the stacked cribbing is, the more the cribbing is prone to failure due to additional slip surfaces present with each piece of stacked cribbing. Further, contamination at the scene with various leaking vehicle fluids increases the danger of the cribbing failing and unwanted vehicle movement. The time spent placing cribbing also is time that could be used to save the trapped victim.

Step chocks are another type of stabilizing tool that supports the vehicle underneath the body and are useful for vehicles of different heights. This may be accomplished by one firefighter positioning him or herself with their back to the vehicle and lifting at the top of the wheel well. Then another firefighter may place the step chock under the rocker panel of the vehicle to take weight off of the wheels. If more weight needs to be taken off, the tires can then be flattened to take all the weight off of the wheels and further flattened so as to place all the weight of the vehicle on the step chocks.

The step chock also provides a tool to transmit a pushing force to the ground by filling the void between the vehicle or other object and ground. Typically, when first responders want to stabilize a vehicle, four step chocks are placed underneath the vehicle at the front and the rear of the passenger compartment under the rocker panels on both sides of the vehicle. Presently, step chocks are solid and non-articulating, and can only be used only in two positions to secure a vehicle. Currently available models for step chocks can only be used with the top surface having elevated steps facing up or down. These step chocks also will only secure heights of 2.54 cm to 27.94 cm. There are other step chocks currently available that can be adjusted, but only operate with one orientation at multiple heights to secure the vehicle.

Thus there still exists a great need for an improved process and system for stabilizing a vehicle, particularly for first responders or rescuers to assist any trapped individuals who may need to be rescued and to protect the first responders or rescuers from the vehicles falling.

DE102015214852A1 discloses an anti-roll structure suitable for blocking rolling objects. The anti-roll structure comprises a first support element and a second support element, which consist in, respectively, a lying surface adapted to be placed on a bearing plane and, parallel to the said bearing plane, and a support surface, opposite to the lying surface and inclined with respect to the said lying surface. A junction element is positioned so that it lies on a plane perpendicular to the lying surface and supporting surface. The first and second support element can be placed at a predefined angle with respect to each other by means of the junction element.

GB2326394A discloses a vehicle stabiliser comprises two wedge-shaped blocks, each having one inclined face with a friction surface, the blocks being placed one upon the other with part of the inclined friction surface of one engaging part of the inclined friction surface of the other. The friction surfaces may have teeth and are preferably inclined at the same angle. The first block may have a flat surface parallel to its base 6 and triangular supporting members.

EP2957470A1 discloses a stabilization device in technical assistance for objects to be secured, in particular for post-accident vehicles.

US2009026427A1 disclosing a cribbing apparatus for stabilizing a post-accident vehicle against unwanted movement of the vehicle during a rescue operation in which a victim trapped in the vehicle is to be extricated from the vehicle. The cribbing apparatus includes a cribbing block having a two cribbing block portions, one of which is vertically movable with respect to the second in order to fill a space between the vehicle and the ground. The cribbing block includes a stair-stepped upper surface to facilitate the placement of the cribbing beneath vehicles of various ground clearances. The first cribbing block portion is raised to further fill space between the vehicle and the ground on high clearance vehicles, such as SUVs, Trucks and Buses. The structure and operation of the cribbing apparatus eliminates the need to forcefully jam cribbing into place between the vehicle and the ground and eliminates the need to stack cribbing.

ES2387162A1 discloses an automatic load stabilizer for intervention in traffic accidents, load securing, and vehicle repair in workshops. The automatic load stabilizer comprises a folding chock that will remain in contact with the vehicle, a base that supports the efforts and contains components of the hydraulic system, a control that activates the device or allows it to be picked up, a telescopic lever to manually raise or close the chock.

US2017362069A1 discloses a lever adapter device for use in lifting a vehicle or other heavy objects. The lever adapter device includes stabilizing feet and one or more support legs. Each one of the stabilizing feet is attached to an end of each support leg. The lever adapter device further includes a hinge disposed at an end of each support leg. Each support leg is extendable and retractable towards or away from the other support leg. The lever adapter device further includes a jack attachment piece and one or more hinges, which are also connected to the one or more support legs. The jack attachment piece is configured to be removably connected to a jack, such as a HI-LIFT jack, or to other lifting devices to assist in lifting the vehicle or the other heavy objects.

DE2629543A1 discloses a folding wheel chock having two rigid triangular frames which are set on the ground with their longest sides and which are hinged together at their apexs at the end of the longest sides. The two frames are splayed apart by a spring at the hinge and a chain at the rear limits the angle between them. The chock is easily folded flat and it is stored on brackets on the tractor. It is automatically erected when set on the ground and the force of the wheels enhances the splaying action, while the chain takes the strain.

### Summary

In one aspect, embodiments in the present description are directed to a step chock for stabilizing a vehicle or other object including a first leg and a second leg, the first leg and the second leg having a top surface, the top surface having a series of steps at different elevations, a bottom surface, and a rear surface, whereby when the first leg and second leg are at an angle in relation to one another, the step chock provides three configurations to stabilize the vehicle or other object by preventing movement of a proximate part of the vehicle or other object. Further, embodiments in the present description are directed to a first configuration whereby the bottom surfaces of the first leg and second leg are in contact with the ground and the top surfaces of the first leg and second leg provide a continuously angled support engagement shelf for engagement with a part of the vehicle or other object, a second configuration whereby the top surfaces of the first leg and second leg are in contact with the ground and the bottom surfaces of the first leg and second leg provide a support engagement shelf for engagement with a part of the vehicle or other object, a third configuration whereby the rear surfaces of the first leg and second leg are in contact with the ground and the front surfaces of the first and second leg are placed underneath a part of the vehicle or other object.

In one aspect, embodiments in the present description are directed to a method of using a first step chock when stabilizing a vehicle or other object, the method including: positioning a step chock underneath a vehicle or other object proximate to a wheel or other part of the vehicle or other object to prevent movement, the step chock comprising a first leg and a second leg, the first leg and the second leg having a top surface, the top surface having series of steps at different elevations, a bottom surface, and a rear surface, releasing a position-locking pin from a first holding member fixed to the second leg, the position-locking pin securing a swivel link to the first holding member in place to a first position, the position-locking pin securing the first leg and second leg in a parallel alignment, moving the first leg at an angle relative to the second leg wherein the first leg and the second leg are connected by one or more hinges, the one or more hinges permitting rotational movement of the first leg relative to the second leg, rotating the swivel link from the first position to a second position, the swivel link in the second position being axially aligned with a second holding member fixed to the second leg, inserting a position-locking pin into the second holding member fixed to the second leg, the position-locking pin securing the swivel link in the second position to the second holding member, the position-locking pin securing the first leg and second leg at an angle, and if need be placing a second step chock in opposing relation underneath the vehicle or other object to the first step chock.

In one aspect, embodiments in the present description are directed to a method for stabilizing a vehicle or other object including the steps of: coupling a lever adapter device to a lever, the lever coupling to and balancing on a fulcrum, the fulcrum fastened to a step chock, the step chock comprising a first leg and a second leg, the first leg and the second leg having a top surface, the top surface having series of steps at different elevations, a bottom surface, front surface, and rear surface, whereby when the first leg and second leg are at an angle in relation to one another; sliding the lever adapter device beneath the vehicle or other object; applying force to an end of the lever causing the lever adapter device to raise the vehicle or other object such that the lever adapter device make contact with an underside of the vehicle or other object; raising the vehicle or other object to the desired height, supporting the underside of the vehicle or the other object with a top surface of the lever adaptor device; positioning one or more step chocks under the vehicle or other object; and then lowering the vehicle or other object onto the step chocks, withdrawing the lever and the lever adapter device by pulling the body of the lever backwards and away from the vehicle or other object. The step chocks also versatile enough to be used in conjunction with any lifting device to secure the vehicle in a raised position.

### SUMMARY

Accordingly, there is provided a step chock as detailed in claim 1 and methods as detailed in claims 10 and 14. Advantageous features are provided in the dependent claims.

### Brief Description of Drawings

The present invention will be described by way of exemplary embodiments, but not limitations, illustrated in the accompanying drawings in which like references denote similar elements, and in which:
Figure 1 shows a perspective left side view of the step chock open in the "Step up" configuration.
Figure 2 shows a right side view of the step chock open in the "Wedge up" configuration.
Figure 3 shows a left side view of the step chock open in the "Toe up" configuration.
Figure 4 shows a rear view of the step chock open in the "Step up" configuration.
Figure 5 shows a perspective rear view of the step chock open in the "Step up" configuration.
Figure 6 shows a top view of the step chock open in the "Step up" configuration.
Figure 7 shows a top view of the step chock closed in the "Step up" configuration.
Figure 8 shows a front view of the step chock closed in the "Step up" configuration.

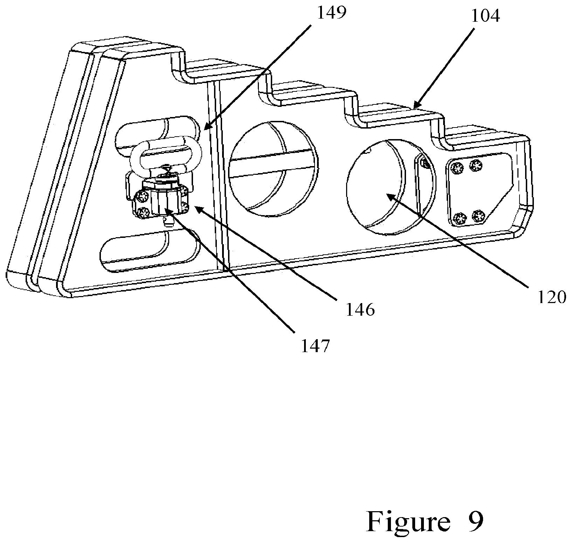

Figure 9 shows a perspective right side view of the step chock closed in the "Step up" configuration.

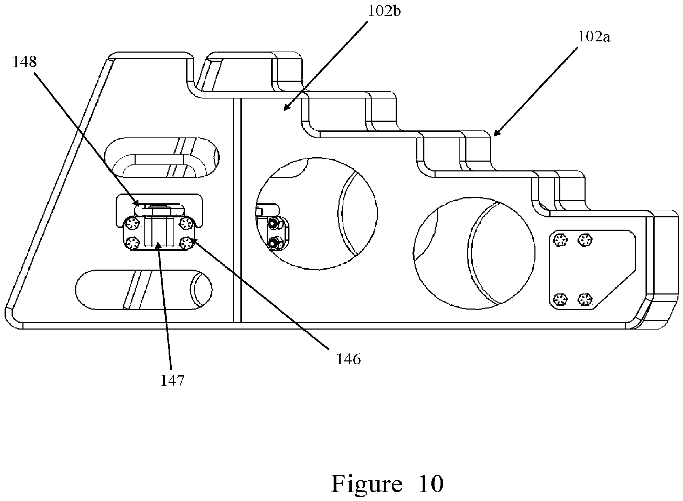

Figure 10 shows a perspective right side view of the step chock open in the "Step up" configuration.
Figure 11 shows a perspective view of the step chock open in the "Step up" configuration being used as a support shelf underneath a vehicle.
Figure 12 shows a perspective view of the step chock open in the "Wedge up" configuration being used as a support shelf underneath a vehicle.
Figure 13 shows a front view of the step chock open in the "Toe up" configuration being used as a support shelf underneath a vehicle.
Figure 14 shows a front view of step chocks open in the "Toe up" configuration to support both sides of the vehicle.
Figure 15 shows a perspective front view of the step chock open in the "Toe up" configuration.
Figure 16 shows a side view of the step chock open in the "Toe up" configuration being used as a fulcrum to balance a lever to be coupled with a lever adapter device to lift a vehicle or other object.

### Detailed Description

In the Summary above and in this Detailed Description, and the claims below, and in the accompanying drawings, reference is made to particular features of the invention. It is to be understood that the disclosure of the invention in this specification includes all possible combinations of such particular features. For example, where a particular feature is disclosed in the context of a particular aspect or embodiment of the invention, or a particular claim, that feature can also be used, to the extent possible, in combination with and/or in the context of other particular aspects and embodiments of the invention, and in the invention generally.

The term "comprises" and grammatical equivalents thereof are used herein to mean that other components, ingredients, steps, etc. are optionally present. For example, an article "comprising" (or "which comprises") components A, B, and C can consist of (i.e., contain only) components A, B, and C, or can contain not only components A, B, and C but also contain one or more other components.

Where reference is made herein to a method comprising two or more defined steps, the defined steps can be carried out in any order or simultaneously (except where the context excludes that possibility), and the method can include one or more other steps which are carried out before any of the defined steps, between two of the defined steps, or after all the defined steps (except where the context excludes that possibility).

The term "at least" followed by a number is used herein to denote the start of a range including that number (which may be a range having an upper limit or no upper limit, depending on the variable being defined). For example, "at least 1" means 1 or more than 1.

The term "at most" followed by a number is used herein to denote the end of a range, including that number (which may be a range having 1 or 0 as its lower limit, or a range having no lower limit, depending upon the variable being defined). "Exemplary" is used herein to mean "serving as an example, instance, or illustration." Any aspect described in this document as "exemplary" is not necessarily to be construed as preferred or advantageous over other aspects Throughout the drawings, like reference characters are used to designate like elements. As used herein, the term "coupled" or "coupling" may indicate a connection. The connection may be a direct or an indirect connection between one or more items. Further, the term "set" as used herein may denote one or more of any item, so a "set of items", may indicate the presence of only one item, or may indicate more items. Thus, the term "set" may be equivalent to "one or more" as used herein.

In the following description, numerous specific details are set forth in order to provide a more thorough understanding of the one or more embodiments described herein. However, it will be apparent to one of ordinary skill in the art that the invention may be practiced without these specific details. In other instances, well-known features have not been described in detail to avoid unnecessarily complicating the description.

The present invention recognizes the unsolved need for an apparatus and method that may be used to rapidly and safely stabilize a vehicle or other object, particularly during emergency rescue operations where rescue workers need to secure the vehicle with the use of step chocks underneath an unstable or impaired vehicle or to safely remove occupants from within or under the vehicle. Existing methods and techniques are not as versatile usually providing only one configuration suitable for a limited range of elevations or contact points to interface with the vehicle. Other existing methods require anywhere from five to ten minutes to implement and if one component of the structure is not properly installed the entire step chock may fail leading to injury or death.

The present description includes embodiments for a step chock apparatus that provides a number of benefits and advantages not found in conventional methods for stabilizing a vehicle or other object. The step chock is structured whereby when the step chock is placed in an opened position the step chock may be orientated to operate in three different configurations whereby the step chock may provide stabilization of a vehicle or other object that the step chock is in contact with. The three different configurations are described from now on as "Step up", Wedge up", and "Toe up" for identifying purposes.

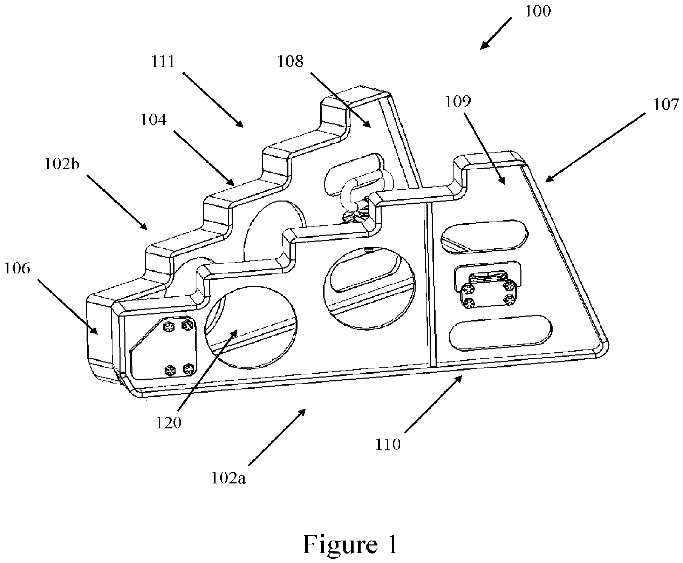

Figure 1 depicts the "Step up" configuration. In the "Step up" configuration step chock 100 is oriented in the open position whereby the bottom surface such as bottom surface 110 is in contact with the ground or another surface step chock 100 may lay parallel against. The top surface such as top surface 111 comprises a series of steps such as steps 104 at different elevations whereby each step 104 provides a support shelf for engagement with a part of a vehicle to be stabilized and since the steps are at different elevation points step chock 100 provides various contact points between step chock 100 and the underside or other parts of the vehicle. The specific step may be chosen as the contact point between the vehicle based on the specific dimensions of the vehicle such as the distance between the ground and the underside of the body of the vehicle as well as the best location and elevation the vehicle may be stabilized by step chock 100. In the preferred embodiment step chock 100 is 35.56 cm from bottom surface 110 to the step of highest elevation of top surface 111.

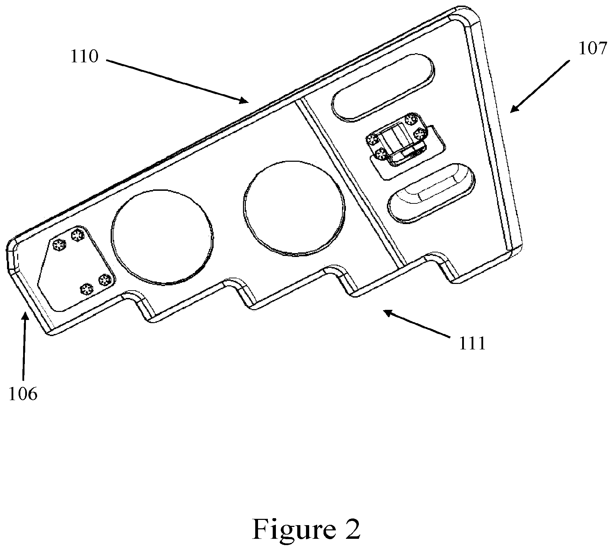

The "Wedge up" configuration is depicted in Figure 2. In the "Wedge up" configuration step chock 100 is oriented in the open position with top surface 111 having steps 104 at different elevations is in contact with the ground whereby bottom surface 110 is angled to the ground and interfaces with the underside or other parts of the vehicle to be stabilized. The now angled bottom surface 110 provides a support for engagement with the underside or other part of the vehicle to be stabilized. With bottom surface 110 at an angle step chock 100 provides various contact points on bottom surface 110 between step chock 100 and parts of the vehicle. In the preferred embodiment step chock 100 is 35.56 cm from top surface 111 to the highest point on bottom surface 110.

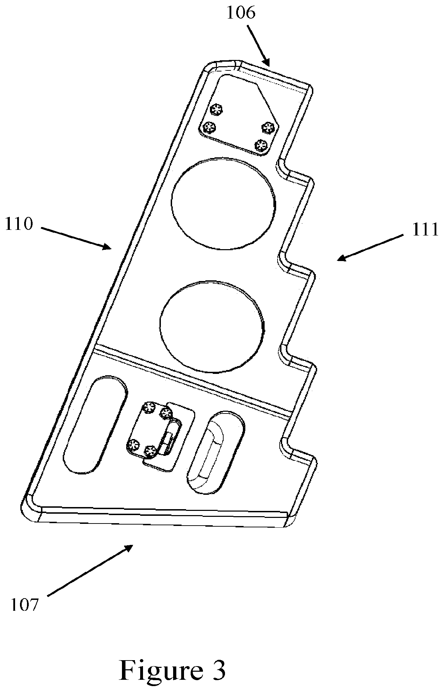

The "Toe up" configuration also provides the ability to have one or more step chocks 100 positioned underneath the vehicle to be stabilized and are used as jack stands. Jack stands are important tools that keep a vehicle propped up after having used a floor jack, like a scissor jack or a hydraulic jack, to lift a vehicle. The "Toe up" configuration is depicted in Figure 3. In the "Toe up" configuration step chock 100 is orientated in the open position with the rear surface such as rear surface 107 in contact with the ground whereby entire step chock 100 is positioned under the vehicle where the front surface such as front surface 106 is in contact with the vehicle to be stabilized. Front surface 106 may be designed to used at two different angles in the "Toe up" configuration, one angle for a vehicle being raised and supported with the opposite side still on the ground and another angle for when a vehicle is lifted and supported on both sides of the vehicle. This enables step chock 100 to have enough foot print in most circumstances to resist any remaining lateral force of the jack adapter didn't offset with the curved top bend. In the preferred embodiment step chock 100 is 50.8 cm from rear surface 107 to front surface 106 in contact with the vehicle. In one of the "Toe up" configurations step chock 100 may also operate as a fulcrum for a lever adaptor device utilized in the initial lifting a vehicle whereby the lever adaptor device is fastened to the top of step chock 100, which will be further be described later in the description.

Step chock 100 is designed whereby in the "Step up", Wedge up", and "Toe up" configurations there is a minimum survivable space of 35.6 cm (fourteen ,14, inches), which provides enough space for the rescue workers to operate under the vehicle as well as escape if, need be. When a car moves the step chock or the step chock is impacted in a way that the step chock topples over while in the "Toe up" configuration the step chock will fall back into another of the configurations which still provides sufficient space for rescue workers under a vehicle for the loading, treating or disentangling a patient as well as processes that require navigating underneath the vehicle.

Further, it is noted that while the step chock is particularly useful and beneficial for firefighters and other first responders during emergency rescue operations, the step chock may be used by any individual in a variety of situations, and is not limited to the use for emergency rescue operations. It is foreseeable that the step chock may be used anytime to stabilize or steady, trees, poles, walls, equipment, furniture, etc. Additional details regarding one or more embodiments of a step chock as discovered and described in the present description are provided below.

Step chock 100 includes a left leg and right leg such as left leg 102a and right leg 102b. Left leg 102a and right leg 102b are of elongated shape having a length greater than the width with a preferred height no longer than 1.5 times the width. This ratio is a non-limiting example and the length may be of any multiple to the width to accommodate specifically tailored situations such as managing the step chock for operation with abnormally shaped vehicles or objects. Left leg 102a and right leg 102b are preferably made out of 6061 aluminum or wood but also may be of any material suitable for the stabilization of a vehicle such as fiber, metal, polycarbonate, a combination of these materials, or any material suitable for step chocks to stabilize a load that is known by those of skilled in the art. Left leg 102a and right leg 102b each has an inner surface such as inner surface 108 and an outer surface such as outer surface 109.

Left leg 102a and right leg 102b have a series of holes such as holes 120 created to lighten the weight of step chock 100 without lessening the structural integrity. The figures show the holes are circular and oval in shape but this is for illustrative purposes only and the holes are not limited to this shape and may be of any variety of curvature and sides, including a triangle, square, trapezoid, hexagon, or octagon. Inner surface 108 and outer surface 109 of left leg 102a and right leg 102b may include a midsection that is recessed relative to the sidewalls whereby the recession is of size to contain and protect the components of step chock 100 therefore only the sidewalls interact when left leg 102a and right leg 102b are in contact with each other as well as when left leg 102a or right leg 102b are placed on a flat surfaces or up against another step chock or other object.

Top surface 111 is stair step in shape with steps such as steps 104. Steps 104 having a riser and tread component, increasing in elevation in the direction of front surface 106 towards rear surface 107. Surfaces may be textured or have a gripping surface material as well as any adhesive whereby the material prevents slippage between surfaces and the undercarriage or other parts of the vehicle that the step chock comes in contact with. The coverage area of the material may be an extremally applied adhesive coating or the material may be impregnated within surface itself. In some embodiments the surfaces may have a machined smooth, textured surface or be manufactured to have receptacles or other apertures to receive replaceable studs, teeth or assemblies to improve gripping surface. In some embodiments surfaces may also receive an adhesive coating or substance.

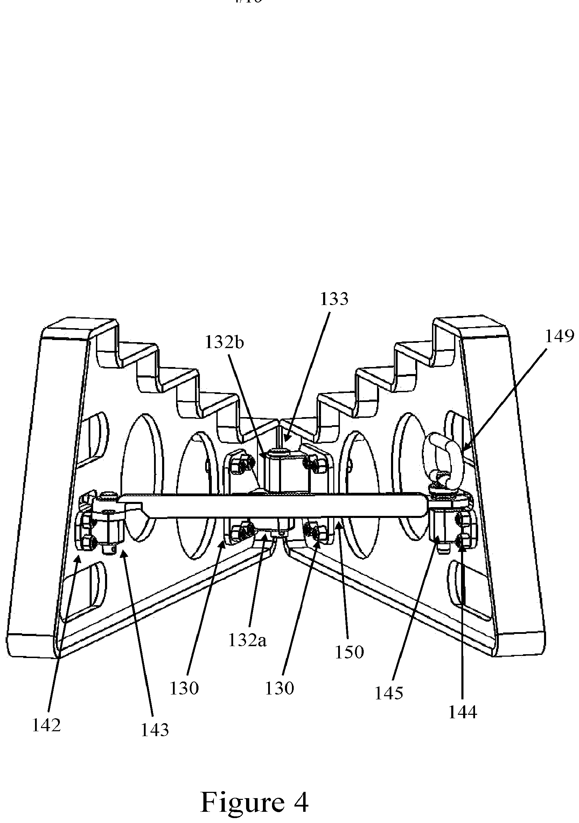

Steps 104 may be of shape whereby when step chock 100 is in a closed position the corresponding steps of left leg 102a and right leg 102b create a plurality of chevron designs and in the opened position the risers of each steps 104 are parallel to a vehicle perpendicular to the vertex of the angle formed by left 102a and right leg 102b. In some embodiments steps 104 may be square to each other creating a straight line when closed. This design of steps 104 provides a more positive contact side of the load. While only five steps 104 are shown on top surface 111 of the left leg 102a and right leg 102b, more or less may be used. Front surface 106, rear surface 107, and bottom surface 110 may also have textured or gripping surface material, adhesive, or rubber pads to prevent slippage when stabilizing the vehicle. Step chock 100 is comprised of backing plates such as backing plates 130 on inner surface 108 and outer surface 109 near front surface 106 of left leg 102a and right leg 102b to reduce the possibility of tear out, as depicted in Figure 4. While backing plates 130 are shown in Figure 4, those skilled in the art may appreciate that additional backing plates may also be used in other non-limiting embodiments backing plates 130 may have apertures or openings for receiving fasteners to secure the plates to the left leg and right leg. The fasteners may be any type of fasteners known in the art, including, but not limited to, any type of screw and/or nut and bolt combination. A first leaf such as leaf 132a having an opening passageway is attached to the surface of the backing plate fastened to inner surface 108 of left leg 102a. A second leaf such as second leaf 132b having an opening passageway is attached to the surface of backing plate 130 fastened to inner surface 108 of right leg 102b. The first leaf 132a and second leaf 132b are located at different elevations whereby the leaves are arranged having the first and second leafs 132a and 132b passageways coaxially aligned.

A pin such as pin 133 may be placed through the opening passageways of first leaf 132a and second leaf 132b and then secured in place, forming a hinge, whereby the hinge permits rotational movement of left leg 102a or right leg 102b relative to the other leg. Pin 133, first leaf 132a, and second leaf 132b may be designed so that rotational movement may be stopped after reaching a specific angle. The number of leaves, pin, and hinges are non-limiting and may be amount to provide sufficient support and that do not deviate from the intention of the step chock. In other embodiments a hinge may be used to couple the right leg and left leg with the hinge having two leaves fastened to the front surface of the right leg and left leg. Along the center axis of the hinge, the leaves have protrusions located at different elevations forming an opening passageway whereby a pin may be placed through the opening passageway and then secured in place. In further embodiments there may be more than one hinges connecting the left leg and right leg.

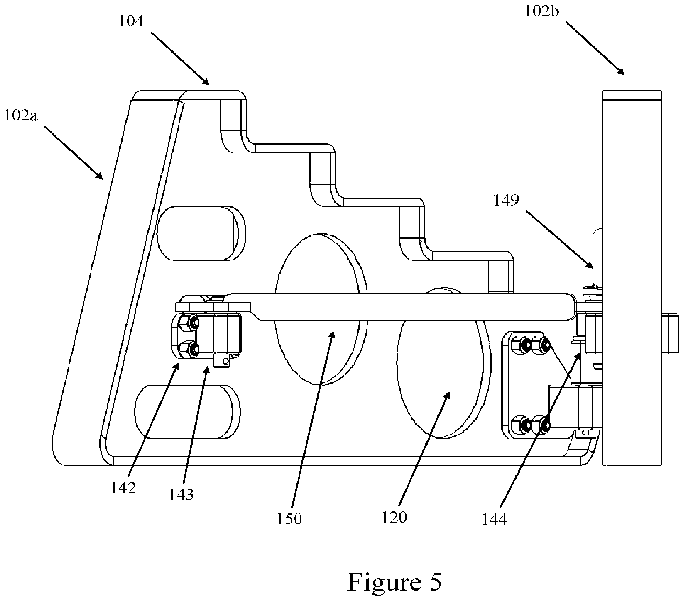

Step chock 100 includes a locking mechanism comprised of plates such as plates 142 and 144 on the inner surface 108 of left leg 102a and right leg 102b respectively, and a plate such as plate 146 on outer surface 109, near rear surface 107, of left leg 102a and right leg 102b having apertures or openings for receiving fasteners to secure plates 142, 144, and 146, as depicted in Figure 4 and 5. A holding member such as holding member 143 having an opening passageway is attached to the surface of backing plate 142 fastened to inner surface 108 of left leg 102a. A holding member, such as holding member 145, having an opening passageway is attached to the surface of backing plate 144 fastened to inner surface 108 of right leg 102b. A holding member, such as holding member 147, having an opening passageway is attached to the surface of backing plate 146 fastened to outer surface 109 of the right leg 102b.

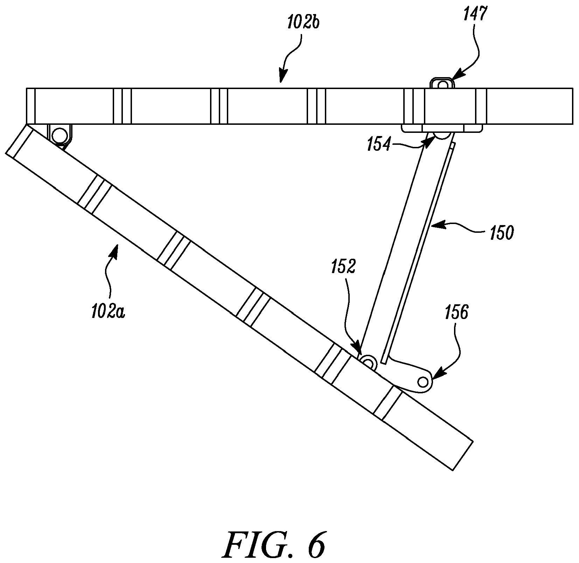

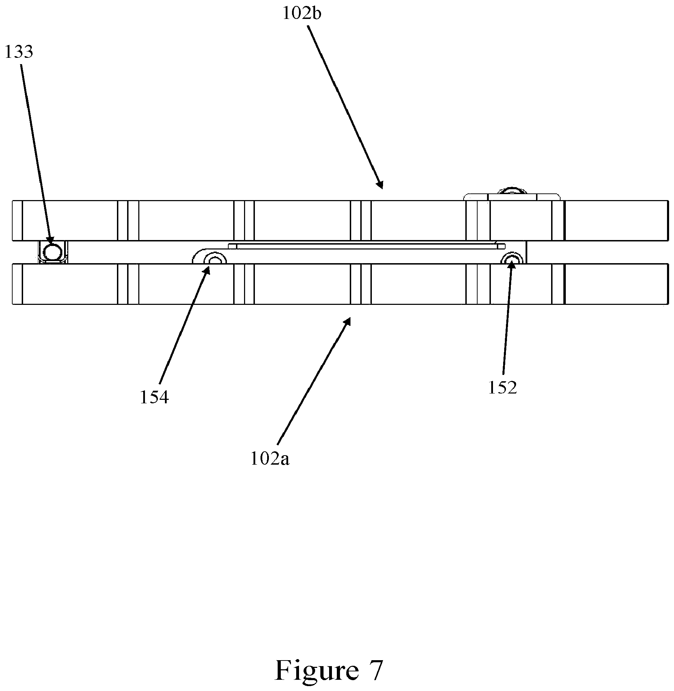

As can be best seen in Figure 6 and 7 the locking mechanism includes an elongated L-shaped arm such as L-shaped arm 150 preferably made of steel but other materials such as iron, bronze, copper, plastics, or other composites may be used. L-shaped arm 150 includes a longer vertical portion and a shorter horizontal portion joined integrally to the longer portion to form the shape of an "L". L-shaped arm 150 is provided with a pivot hole such as pivot hole 152 at the comer of the vertical portion and horizontal portion as well as a first retainer hole such as first retainer hole 154 at the end of the vertical portion and a second retainer hole such as second retainer hole 156 at the end of the horizontal portion. Pivot hole 152 is coaxially aligned with the opening passageway of holding member 143 located on inner surface 108 of the left leg 102a. A fastener is placed through pivot hole 152 and the opening passageway of the holding member producing a pivot point for L-shaped arm 150.

The pivot point allows L-shaped arm 150 to swing or rotate within step chock 100 between a first position corresponding to where step chock 100 is in an open position and a second position corresponding to where step chock 100 is in a closed position. In the open position retainer hole 154 on the vertical portion of L-shaped arm 150 is coaxially aligned with the opening passageway of the holding member 145 on inner surface 108 of right leg 102b whereby a position-locking pin such as position-locking pin 149 may be placed through retainer hole 154 and holding member 145 on inner surface 108 of right leg 102b and be secured in place thus maintaining step chock 100 in an open position.

When step chock 100 is in an open position left leg 102a and right leg 102b are maintained at a distance with a specific angle between them. This specific angle may be 35 degrees; however this is non-limiting and may be of any degrees separation from 0 degrees to 360 degrees.

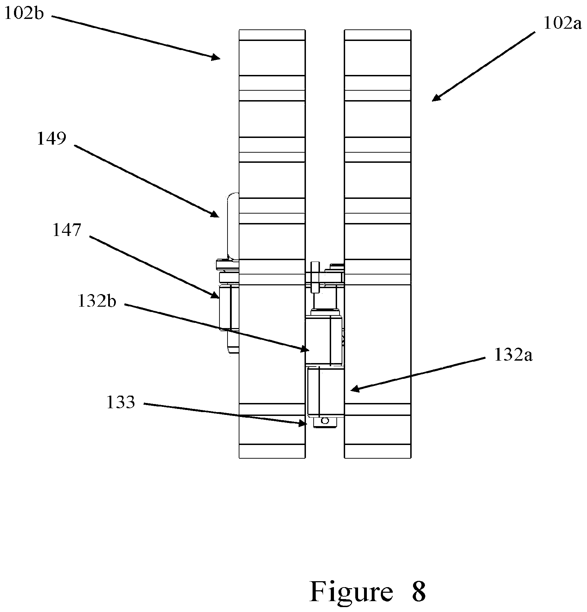

In the closed position retainer hole 156 on the horizontal portion of L-shaped arm 150 is coaxially aligned with the opening passageway of holding member 146 whereby the position-locking pin may be placed through retainer hole 156 and holding member 146 on outer surface 109 of right leg 102b and be secured in place thus maintaining step chock 100 in a closed position, as depicted in Figure 8. A hole such as hole 148 passes through inner surface 108 and outer surface 109 of right arm 102b whereby hole 148 is of a size and location so that the horizontal portion of L-shaped arm 150 may pass through inner surface 108 and outer surface 109 of right leg 102b to be coaxially aligned with holding member 147 attached to backing plate 146 on outer surface 109 of right leg 102b. When step chock 100 is in a closed position left leg 102a and right leg 102b are maintained at a close proximity in a parallel configuration. In further embodiments the L-shaped arm may be reversed and fastened to a hole on the inner surface of the right leg whereby the L-shaped arm may be fastened with the position-locking pin to a holding member on the inner surface of the left leg to lock the step chock in an open position and to a holding member on the outer surface of the left leg to lock the step chock in a closed position.

The figures only show one illustrative example and the number of holding members, hinges, pivot points to lock the step chock at a closed position or open position are non-limiting. In further embodiments there may be multiple L-shaped arms or the L-shaped arm may be replaced by a different apparatus or shape such as a "T" or "F" and may have multiple holes or holes in different locations whereby the L-shaped arm can be locked in a multitude of positions whereby the step chock may be locked in an open position at a different angle than the one illustrated. In some non-limiting embodiments, the step chock may have one or more bars, rods, or other structures connecting from one surface to another to create a crush resistant addition if a load such as a vehicle or other object was knocked out of the "Toe up" configuration so that the step chock may provide a survivable space for a First Responder or other user.

In order to move step chock 100 from the closed position to the open position, an operator removes the position-locking pin from retainer hole 156 on the horizontal portion of L-shaped arm 150 and holding member 147 positioned on backing plate 146 of outer surface 109 of right leg 102b. The operator would then angularly rotate left leg 102a from right leg 102b and swing L-shaped arm 150 in clockwise direction around the pivot point so as to cause retainer hole 154 on the vertical portion of L-shaped arm 150 to slide over to holding member 145 located on backing plate 144 inner surface 108 of right leg 102b. The position-locking pin is then placed through retainer hole 154 on vertical portion of L-shaped arm 150 and holding member 145 thus locking step chock 100 in an open position. Once step chock 100 is locked in the open position step chock 100 may be orientated in the "Step up", Wedge up", and "Toe up" configurations.

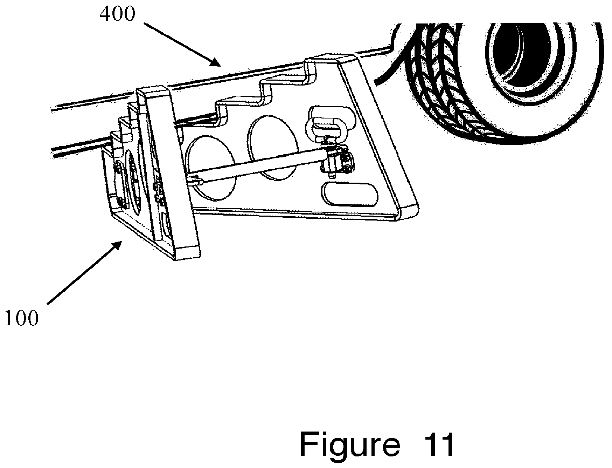

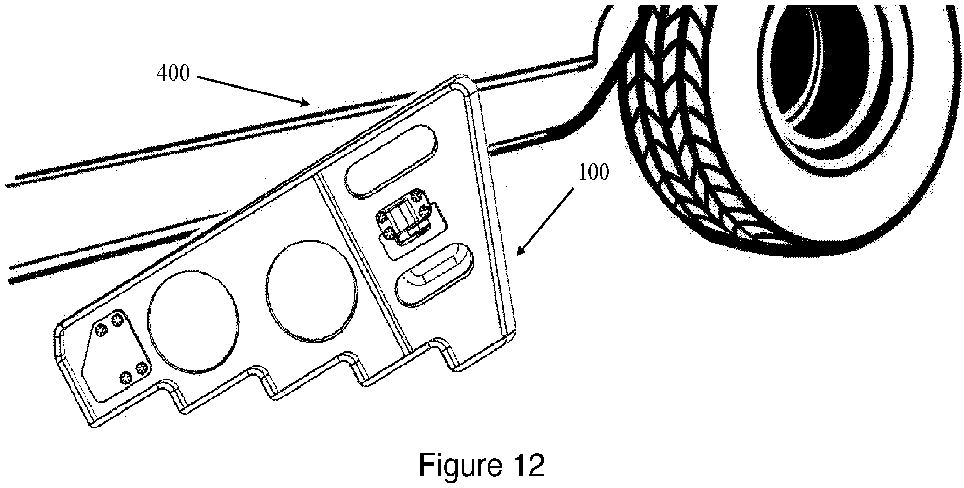

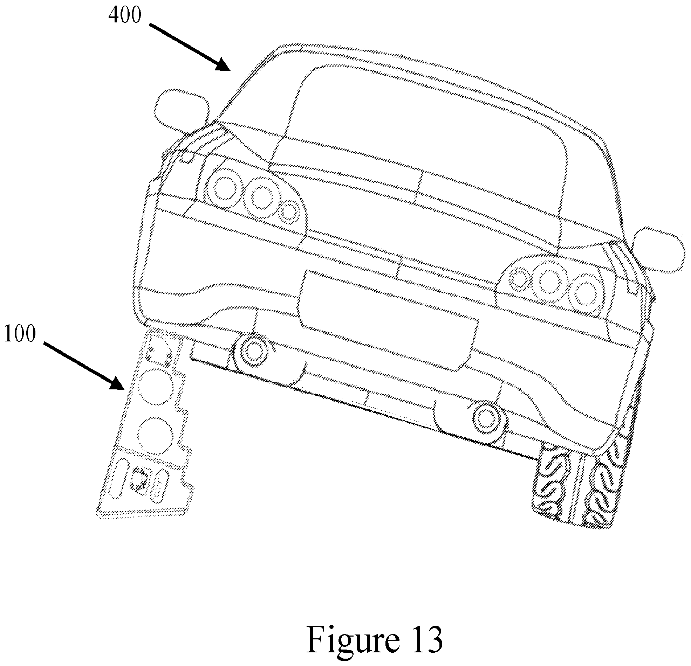

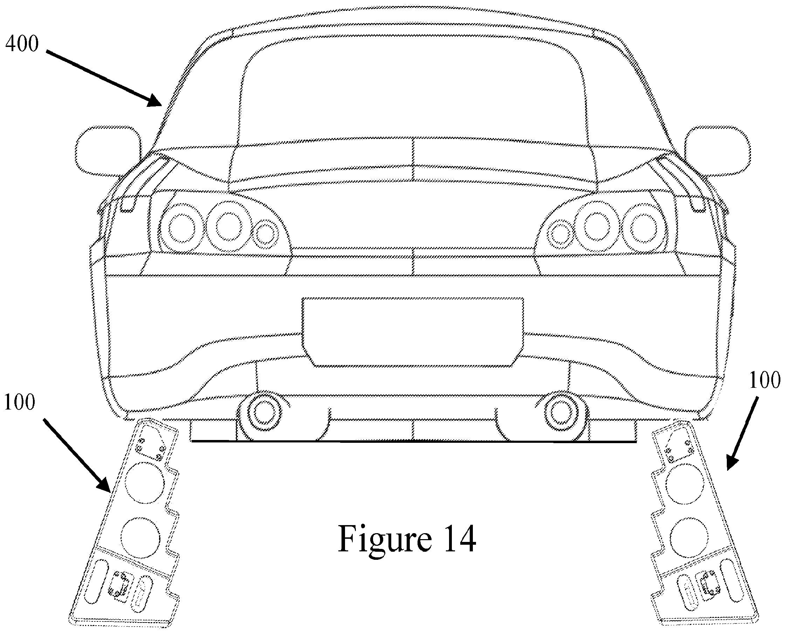

In the "Step up" configuration, bottom surface 110 is in contact with the ground and top surface 111 is used a support shelf for engagement with a part of a vehicle such as vehicle 400 as shown in Figure 11. In the "Wedge up" configuration, top surface 111 is in contact with the ground and bottom surface 110 is used a support shelf for engagement with a part of vehicle 400 as shown in Figure 12. In the "Toe up" configuration, rear surface 107 is in contact with the ground and bottom surface 110 is used a support shelf for engagement with a part of vehicle 400 as shown in Figure 13 and 14. In Figure 13 a first angle on front surface 106 is used to provide support for vehicle 400 being raised and supported with the opposite side still on the ground. In Figure 13 a second angle on front surface 106 is used for when vehicle 400 is lifted and supported on both sides of the vehicle.

To position step chock 100, a first operator stations themselves with their back to the vehicle and lifts at the top of a wheel while a second operator then places step chock 100 under the vehicle preferably at the frame rails, rocker panel, or any other parts proximate to the wheel of the vehicle to take weight off of the wheel and prevent the wheel from rotating. If more weight needs to be taken off, the tires can then be flattened by releasing air from the tire by ordinary means known by those skilled in the art to place all the weight of the vehicle on step chocks 100. The first and second operator may provide additional stabilization to the vehicle by using four (4) step chocks 100 at front and rear of passenger compartment under the frame rail or rocker panels on both sides of the vehicle.

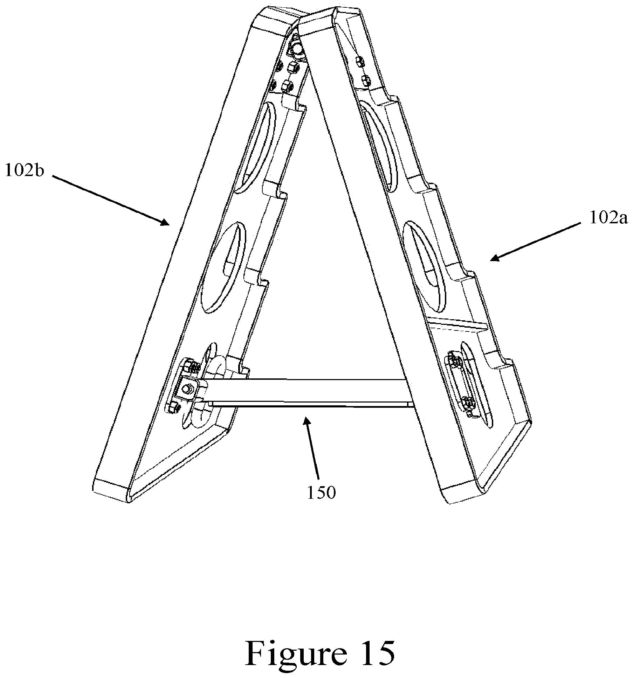

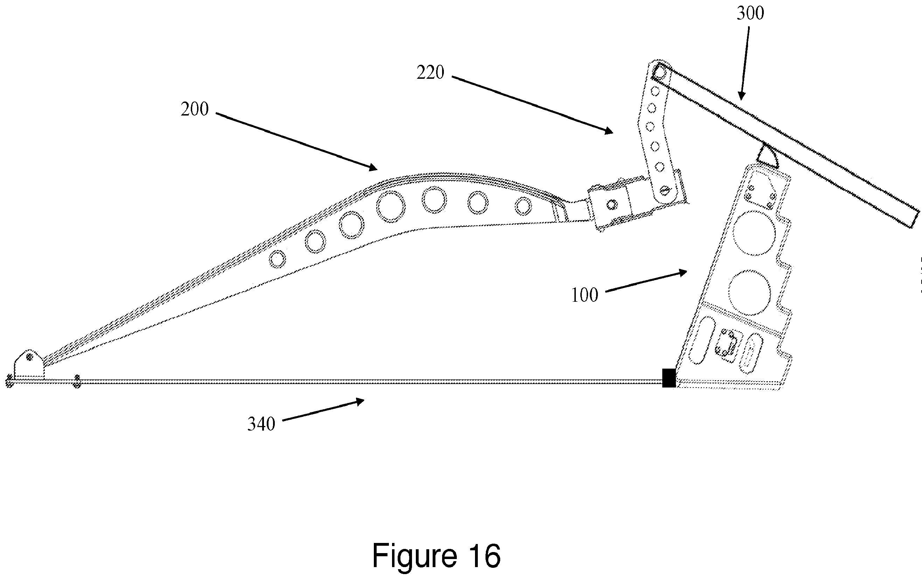

There are multiple uses for step chock 100. In the "Toe up" configuration, as depicted in Figure 15 a first step chock 100 may operate as a fulcrum for a lever adaptor device such as lever adaptor device 200 and lever such as 300 utilized in the initial lifting a vehicle as depicted in Figure 16.

Step chock 100 may be coupled to and balancing on a fulcrum such as fulcrum 320. There are times where an operator of lever adapter device 200 may not be in possession or have easy access to the various specialized jacks useful in lifting vehicles or other objects. In such a situation, a lever adaptor device 200 coupled to the lever 300, disposed over fulcrum 320 may suffice to quickly and safely lift a vehicle or other object. Accordingly, an operator may couple lever adapter device 200 to lever 300 by an attachment piece such as attachment piece 220 to a body of lever 300. In one embodiment, lever 300 may include a designated slot for inserting a position-locking pin, into the slot of lever 300 and also through the designated slot located in the frame of attachment piece 220. Straps such as strap 340 may be configured to allow the operator to strap step chock 100 to lever adapter device 200 to prevent the base of lever adapter device 200 from kicking out.

Afterwards, the operator (with or without the assistance of other individuals) may determine a suitable location beneath a vehicle or other object for sliding lever adapter device 200 beneath the vehicle or other object. Then, the operator may apply force to the free end of lever 300 to cause lever adapter device 200 to raise the vehicle or other object such that lever adaptor device 200 makes contact with an underside of the vehicle or other object. If one applies sufficient force to the end of lever 300, the operator may be able to at least nominally and minimally raise the vehicle or other object to provide some space for one or more other operators to place a second and third step chock underneath the vehicle whereby the second and third step chocks may be in the "Step up", "Wedge up" or "Toe up" configurations depending on the need of the rescue operation or the situation at hand.

In some embodiments the vehicle may be lifted to a certain height whereby one or more step chocks are positioned under the vehicle in the "Step up" or "Wedge up" configuration initially to assist the operators in lifting the vehicle whereby then the vehicle may be lifted further whereby step chocks may be orientated in the "Toe up" configuration to provide for greater space underneath the vehicle. Thus, the embodiment shown is shown to illustrate that there may be scenarios where the step chock may still be useful (particularly in emergency rescue operations where it is critical to access trapped individuals as quickly and as safely as possible).

The foregoing description of the invention has been presented for purposes of illustration and description and is not intended to be exhaustive or to limit the invention to the precise form disclosed. Many modifications and variations are possible in light of the above teaching. The embodiments were chosen and described to best explain the principles of the invention and its practical application to thereby enable others skilled in the art to best use the invention in various embodiments and with various modifications suited to the use contemplated. The scope of the invention is defined by the claims.

## Claims

1. A step chock (100) for use in stabilizing a vehicle (400) or other object, the step chock (100) comprising:
a first leg (102a) and a second leg (102b) having a top surface (111), a bottom surface (110), a front surface (106), and a rear surface (107);
the first leg (102a) forming a first portion of the top surface (111), a first portion of the bottom surface (110), a first portion of the front surface (106), and a first portion of the rear surface (107);
the second leg (102b) forming a second portion of the top surface (111), a second portion of the bottom surface (110), a second portion of the front surface (106), and a second portion of the rear surface (107);
one or more hinges connected to the first leg (102a) and the second leg (102b), the hinges configured to permit rotational movement of the first leg (102a) relative to the second leg (102b) such that the step chock (100) defines a first configuration, in which the first leg (102a) and the second leg (102b) are parallel, and a second configuration, in which the first leg (102a) and the second leg (102b) are at an angle from one another, and the step chock transitions from one of the first configuration and the second configuration to the other of the first configuration and the second configuration via rotation of at least one of the first leg (102a) and second leg (102b) relative to the other of the first leg (102a) and second leg (102b) about an axis of the one or more hinges, **characterized in that** the top surface (111) includes a series of steps (104) increasing in elevation along a first direction from the front surface (106) toward the rear surface (107), the series of steps including a plurality of treads and a plurality of risers, wherein each of the plurality of treads is parallel to the bottom surface (110), and each of the plurality of treads is sized for supporting a vehicle (400) in such a way that only one of the plurality of treads contacts the vehicle (400); and
the first portion of the top surface (111) and the second portion of the top surface (111) each form respective portions of the series of steps (104).

2. The step chock (100) of claim 1, wherein the first leg (102a) is at a 35 degrees angle from the second leg (102b) in the second configuration.

3. The step chock (100) of claim 1 or 2, wherein the first leg (102a) and second leg (102b) are made of aluminum.

4. The step chock (100) of any preceding claim, wherein the first portion of the front surface (106) and the second portion of the front surface (106) are each comprised of a first section and second section, the first section of the first portion of the front surface (106) angularly offset from the second section of the first portion of the front surface (106), and the first section of the second portion of the front surface (106) angularly offset from the second section of the second portion of the front surface (106).

5. The step chock (100) any preceding claim, wherein the top surface (111), bottom surface (110), front surface (106), and rear surface (107) of the first leg (102a) and second leg (102b) are comprised of a gripping manufactured with receptacles to receive replaceable studs or teeth.

6. The step chock (100) any preceding claim, wherein the top surface (111) of the first leg (102a) and second leg (102b) is shaped such that when the first leg (102a) and second leg (102b) are parallel the first portion of the top surface and the second portion of the top surface form a plurality of chevron shaped designs.

7. The step chock (100) of claim 6, wherein when the first leg (102a) and second leg (102b) are angularly offset one or more of the plurality of risers is/are parallel to a vehicle (400) or other object perpendicular to the vertex of the angle formed by the first leg (102a) and second leg (102b).

8. The step chock (100) any preceding claim, the step chock (100) further comprising a swinging link mechanism, the swinging link mechanism having a first position and second position, the swinging link mechanism in the first position locking the first leg (102a) and the second leg (102b) parallel to one another, the swinging link mechanism in the second position locking the first leg (102a) and the second leg (102b) at an angle from one another.

9. The step chock (100) of claim 8, the swinging link mechanism comprising an L-shaped arm (150), the L-shaped arm (150) having a vertical portion (15) and horizontal portion and a hole through the L-shaped arm between the vertical portion and horizontal portion.

10. A method of using a step chock (100) when stabilizing a vehicle (400) or other object, the method comprising:
increasing a height of the vehicle (400) or other object relative to an underlying surface upon which the vehicle (400) or other object was resting; **characterized by**:
providing a step chock (100), the step chock (100) comprising a first leg (102a) and a second leg (102b), the first leg (102a) and the second leg (102b) having a top surface (111), the top surface (111) having series of steps (104) at different elevations, a bottom surface (110), a front surface (106), and a rear surface (107), one or more hinges connected to the first leg (102a) and the second leg (102b), the hinges permitting rotational movement of the first leg (102a) relative to the second leg (102b) about an axis; and
rotating the first leg (102a) relative to the second leg (102b) about the axis such that the first leg (102a) is angularly offset with respect to the second leg (102b); and
subsequent to increasing the height of the vehicle (400) or other object, positioning the step chock (100) underneath the vehicle (400) or other object such that a first portion of the step chock (100) contacts the vehicle (400) or other object, a second portion of the step chock (100) contacts the underlying surface, and the axis intersects both , the vehicle (400) or other object and the underlying surface.

11. The method of claim 10, further comprising at least one of:
positioning the step chock (100) underneath a vehicle (400) or other object in a configuration, the bottom surface (110) of the first leg (102a) and second leg (102b) contacting with the ground, the top surface (111) of the first leg (102a) and second leg (102b) providing a support engagement shelf for engagement with a part of the vehicle (400) or other object thus supporting the underside of the vehicle (400) or the other object;
positioning the step chock underneath a vehicle (400) or other object in a configuration, the top surface (111) of the first leg (102a) and second leg (102b) contacting with the ground and the bottom surface of the first leg (102a) and second leg (102b) providing a support engagement shelf for engagement with a part of the vehicle (400) or other object thus supporting the underside of the vehicle (400) or the other object;
positioning the step chock underneath a vehicle (400) or other object in a configuration with the rear surface of the first leg (102a) and second leg (102b) contacting with the ground and the front surface (106) of the first leg (102a) and second leg (102b) contacting with a part of the vehicle (400) or other object thus supporting the underside of the vehicle (400) or the other object.

12. The method of claim 10 or 11, further comprising releasing a position-locking pin (149) from a first holding member (147) fixed to the second leg (102b), the position-locking pin (149) securing a swivel link to the first holding member (147) in place to a first position, securing the first leg (102a) and second leg (102b) in parallel alignment.

13. The method of claim 12, further comprising rotating the swivel link from the first position to a second position, the swivel link in the second position axially aligned with a second holding member (143) fixed to the second leg (102b), optionally further comprising inserting a position-locking pin (149) into the second holding member (145) fixed to the second leg (102b), the position-locking pin (149) securing the swivel link in the second position to the second holding member (145), securing the first leg (102a) and second leg (102b) at an angle.

14. A method for stabilizing a vehicle (400) or other object, the method comprising:
coupling a lever adapter device (200) to a lever (300), the lever (300) coupling to and balancing on a fulcrum;
sliding the lever adapter device (200) beneath the vehicle (200) or other object; and
applying force to an end of the lever (300) causing the lever adapter device (200) make contact with an underside of the vehicle (400) or other object, **characterized in that** the fulcrum is fastened to a step chock, the step chock (100) comprising a first leg (102a) and a second leg (102b), the first leg (102a) and the second leg (102b) having a top surface (111), the top surface (111) having series of steps (104) at different elevations, a bottom surface (110), rear surface (107), and a front surface (106), wherein the first leg (102a) and second leg (102b) are at an angle in relation to one another.

15. The method of claim 14, further comprising raising the vehicle (400) or other object to the desired height, optionally further comprising positioning one or more step chocks (100) underneath the vehicle (400) or other object and optionally further comprising lowering the vehicle (400) or other object onto the step chocks (100).

## Patentansprüche

1. Stufenbremsblock (100) zur Verwendung bei einem Stabilisieren eines Fahrzeugs (400) oder eines anderen Objekts, wobei der Stufenbremsblock (100) Folgendes umfasst:
einen ersten Schenkel (102a) und einen zweiten Schenkel (102b), die eine obere Oberfläche (111), eine untere Oberfläche (110), eine vordere Oberfläche (106) und eine hintere Oberfläche (107) aufweisen;
wobei der erste Schenkel (102a) einen ersten Abschnitt der oberen Oberfläche (111), einen ersten Abschnitt der unteren Oberfläche (110), einen ersten Abschnitt der vorderen Oberfläche (106) und einen ersten Abschnitt der hinteren Oberfläche (107) ausbildet;
wobei der zweite Schenkel (102b) einen zweiten Abschnitt der oberen Oberfläche (111), einen zweiten Abschnitt der unteren Oberfläche (110), einen zweiten Abschnitt der vorderen Oberfläche (106) und einen zweiten Abschnitt der hinteren Oberfläche (107) ausbildet;
ein oder mehrere Scharniere, die mit dem ersten Schenkel (102a) und dem zweiten Schenkel (102b) verbunden sind, wobei die Scharniere konfiguriert sind, um eine Drehbewegung des ersten Schenkels (102a) relativ zu dem zweiten Schenkel (102b) derart zu ermöglichen, dass der Stufenbremsblock (100) eine erste Konfiguration, in der der erste Schenkel (102a) und der zweite Schenkel (102b) parallel sind, und eine zweite Konfiguration definiert, in der der erste Schenkel (102a) und der zweite Schenkel (102b) in einem Winkel zueinander stehen, und der Stufenbremsblock von der einen ersten Konfiguration und der zweiten Konfiguration zu der anderen der ersten Konfiguration und der zweiten Konfiguration über eine Drehung des ersten Schenkels (102a) und/oder des zweiten Schenkels (102b) relativ zu dem anderen des ersten Schenkels (102a) und des zweiten Schenkels (102b) um eine Achse des einen oder der mehreren Scharniere herum übergeht,
**dadurch gekennzeichnet, dass** die obere Oberfläche (111) eine Reihe von Stufen (104) beinhaltet, die sich entlang einer ersten Richtung von der vorderen Oberfläche (106) in Richtung der hinteren Oberfläche (107) in einer Erhebung vergrößern, die Reihe von Stufen mehrere Trittflächen und mehrere Setzstufen beinhaltet, wobei jede der mehreren Trittflächen parallel zu der unteren Oberfläche (110) ist und jede der mehreren Trittflächen zum Stützen eines Fahrzeugs (400) derartig bemessen ist, dass nur eine der mehreren Trittflächen das Fahrzeug (400) berührt; und
der erste Abschnitt der oberen Oberfläche (111) und der zweite Abschnitt der oberen Oberfläche (111) jeweils jeweilige Abschnitte der Reihe von Stufen (104) ausbilden.

2. Stufenbremsblock (100) nach Anspruch 1, wobei der erste Schenkel (102a) in der zweiten Konfiguration in einem Winkel von 35 Grad von dem zweiten Schenkel (102b) liegt.

3. Stufenbremsblock (100) nach Anspruch 1 oder 2, wobei der erste Schenkel (102a) und der zweite Schenkel (102b) aus Aluminium hergestellt sind.

4. Stufenbremsblock (100) nach einem der vorhergehenden Ansprüche, wobei der erste Abschnitt der vorderen Oberfläche (106) und der zweite Abschnitt der vorderen Oberfläche (106) jeweils aus einem ersten Bereich und einem zweiten Bereich bestehen, wobei der erste Bereich des ersten Abschnitts der vorderen Oberfläche (106) von dem zweiten Bereich des ersten Abschnitts der vorderen Oberfläche (106) winkelversetzt ist und der erste Bereich des zweiten Abschnitts der vorderen Oberfläche (106) von dem zweiten Bereich des zweiten Abschnitts der vorderen Oberfläche (106) winkelversetzt ist.

5. Stufenbremsblock (100) nach einem der vorhergehenden Ansprüche, wobei die obere Oberfläche (111), die untere Oberfläche (110), die vordere Oberfläche (106) und die hintere Oberfläche (107) des ersten Schenkels (102a) und des zweiten Schenkels (102b) aus einem griffigen Material bestehen, das mit Aufnahmen gefertigt ist, um austauschbare Stifte oder Zähne aufzunehmen.

6. Stufenbremsblock (100) nach einem der vorhergehenden Ansprüche, wobei die obere Oberfläche (111) des ersten Schenkels (102a) und des zweiten Schenkels (102b) derart geformt ist, dass, wenn der erste Schenkel (102a) und der zweite Schenkel (102b) parallel sind, der erste Abschnitt der oberen Oberfläche und der zweite Abschnitt der oberen Oberfläche mehrere chevronförmige Muster ausbilden.

7. Stufenbremsblock (100) nach Anspruch 6, wobei, wenn der erste Schenkel (102a) und der zweite Schenkel (102b) winkelversetzt sind, eine oder mehrere der mehreren Setzstufen parallel zu einem Fahrzeug (400) oder einem anderen Objekt ist/sind, das senkrecht zu dem Scheitelpunkt des Winkels ist, der durch den ersten Schenkel (102a) und den zweiten Schenkel (102b) ausgebildet wird.

8. Stufenbremsblock (100) nach einem der vorhergehenden Ansprüche, wobei der Stufenbremsblock (100) ferner einen Schwinggelenksmechanismus umfasst, wobei der Schwinggelenksmechanismus eine erste Position und eine zweite Position aufweist, wobei der Schwinggelenksmechanismus in der ersten Position den ersten Schenkel (102a) und den zweiten Schenkel (102b) parallel zueinander sperrt, wobei der Schwinggelenksmechanismus in der zweiten Position den ersten Schenkel (102a) und den zweiten Schenkel (102b) in einem Winkel zueinander sperrt.

9. Stufenbremsblock (100) nach Anspruch 8, wobei der Schwinggelenksmechanismus einen L-förmigen Arm (150) umfasst, wobei der L-förmige Arm (150) einen vertikalen Abschnitt (15) und einen horizontalen Abschnitt und ein Loch durch den L-förmigen Arm zwischen dem vertikalen Abschnitt und dem horizontalen Abschnitt aufweist.

10. Verfahren zum Verwenden eines Stufenbremsblocks (100), wenn ein Fahrzeug (400) oder ein anderes Objekt stabilisiert wird, wobei das Verfahren Folgendes umfasst:
Vergrößern einer Höhe des Fahrzeugs (400) oder des anderen Objekts relativ zu einer darunterliegenden Oberfläche, auf der das Fahrzeug (400) oder das andere Objekt ruhte; **gekennzeichnet durch** Folgendes:
Bereitstellen eines Stufenbremsblocks (100), wobei der Stufenbremsblock (100) Folgendes umfasst: einen ersten Schenkel (102a) und einen zweiten Schenkel (102b), wobei der erste Schenkel (102a) und der zweite Schenkel (102b) eine obere Oberfläche (111), wobei die obere Oberfläche (111) eine Reihe von Stufen (104) in unterschiedlichen Erhebungen aufweist, eine untere Oberfläche (110), eine vordere Oberfläche (106) und eine hintere Oberfläche (107) aufweist, ein oder mehrere Scharniere, die mit dem ersten Schenkel (102a) und dem zweiten Schenkel (102b) verbunden sind, wobei die Scharniere die Drehbewegung des ersten Schenkels (102a) relativ zu dem zweiten Schenkel (102b) um eine Achse herum ermöglichen; und
Drehen des ersten Schenkels (102a) relativ zu dem zweiten Schenkel (102b) derart um die Achse herum, dass der erste Schenkel (102a) hinsichtlich des zweiten Schenkels (102b) winkelversetzt ist; und
im Anschluss an das Vergrößern der Höhe des Fahrzeugs (400) oder des anderen Objekts, Positionieren des Stufenbremsblocks (100) unter dem Fahrzeug (400) oder dem anderen Objekt derart, dass ein erster Abschnitt des Stufenbremsblocks (100) das Fahrzeug (400) oder das andere Objekt berührt, ein zweiter Abschnitt des Stufenbremsblocks (100) die darunterliegende Oberfläche berührt und die Achse sowohl das Fahrzeug (400) oder das andere Objekt als auch die darunterliegende Oberfläche schneidet.

11. Verfahren nach Anspruch 10, das ferner Folgendes umfasst:
Positionieren des Stufenbremsblocks (100) unter einem Fahrzeug (400) oder einem anderen Objekt in einer Konfiguration, wobei die untere Oberfläche (110) des ersten Schenkels (102a) und des zweiten Schenkels (102b) den Boden berührt, die obere Oberfläche (111) des ersten Schenkels (102a) und des zweiten Schenkels (102b) eine Stützeingriffsplatte für einen Eingriff mit einem Teil des Fahrzeugs (400) oder des anderen Objekts bereitstellt und somit die Unterseite des Fahrzeugs (400) oder des anderen Objekts stützt;
Positionieren des Stufenbremsblocks unter einem Fahrzeug (400) oder einem anderen Objekt in einer Konfiguration, wobei die obere Oberfläche (111) des ersten Schenkels (102a) und des zweiten Schenkels (102b) den Boden berührt und die untere Oberfläche des ersten Schenkels (102a) und des zweiten Schenkels (102b) eine Stützeingriffsplatte für den Eingriff mit einem Teil des Fahrzeugs (400) oder des anderen Objekts bereitstellt, und somit die Unterseite des Fahrzeugs (400) oder des anderen Objekts stützt; und/oder
Positionieren des Stufenbremsblocks unter einem Fahrzeug (400) oder einem anderen Objekt in einer Konfiguration, wobei die hintere Oberfläche des ersten Schenkels (102a) und des zweiten Schenkels (102b) den Boden berührt und die vordere Oberfläche (106) des ersten Schenkels (102a) und des zweiten Schenkels (102b) einen Teil des Fahrzeugs (400) oder des anderen Objekts berührt und somit die Unterseite des Fahrzeugs (400) oder des anderen Objekts stützt.

12. Verfahren nach Anspruch 10 oder 11, das ferner ein Lösen eines Positionssperrbolzens (149) von einem ersten Halteelement (147) umfasst, das an dem zweiten Schenkel (102b) befestigt ist, wobei der Positionssperrbolzen (149) ein Schwenkgelenk an dem ersten Halteelement (147) in einer ersten Position an Ort und Stelle sichert, wobei der erste Schenkel (102a) und der zweite Schenkel (102b) in paralleler Ausrichtung gesichert sind.

13. Verfahren nach Anspruch 12, das ferner das Drehen des Schwenkgelenks aus der ersten Position in eine zweite Position umfasst, wobei das Schwenkgelenk in der zweiten Position an einem zweiten Halteelement (143) axial ausgerichtet ist, das an dem zweiten Schenkel (102b) befestigt ist, das optional ferner ein Einsetzen eines Positionssperrbolzens (149) in das zweite Halteelement (145) umfasst, das an dem zweiten Schenkel (102b) befestigt ist, wobei der Positionssperrbolzen (149) das Schwenkgelenk in der zweiten Position an dem zweiten Halteelement (145) sichert, wobei der erste Schenkel (102a) und der zweite Schenkel (102b) in einem Winkel gesichert sind.

14. Verfahren zum Stabilisieren eines Fahrzeugs (400) oder eines anderen Objekts, wobei das Verfahren Folgendes umfasst:
Koppeln einer Hebeladaptervorrichtung (200) an einen Hebel (300), wobei der Hebel (300) an einen Drehpunkt gekoppelt ist und auf diesem balanciert;
Schieben der Hebeladaptervorrichtung (200) unterhalb des Fahrzeugs (200) oder des anderen Objekts; und
Aufbringen einer Kraft auf ein Ende des Hebels (300), die bewirkt, dass die Hebeladaptervorrichtung (200) mit einer Unterseite des Fahrzeugs (400) oder des anderen Objekts in Berührung kommt, **dadurch gekennzeichnet, dass** der Drehpunkt an einem Stufenbremsblock angebracht ist, wobei der Stufenbremsblock (100) einen ersten Schenkel (102a) und einen zweiten Schenkel (102b) umfasst, wobei der erste Schenkel (102a) und der zweite Schenkel (102b) eine obere Oberfläche (111) aufweisen, wobei die obere Oberfläche (111) die Reihe von Stufen (104) in unterschiedlichen Erhebungen, eine untere Oberfläche (110), eine hintere Oberfläche (107) und eine vordere Oberfläche (106) aufweist, wobei der erste Schenkel (102a) und der zweite Schenkel (102b) in einem Winkel in Bezug auf einander stehen.

15. Verfahren nach Anspruch 14, das ferner ein Anheben des Fahrzeugs (400) oder des anderen Objekts auf die gewünschte Höhe umfasst, optional ferner das Positionieren eines oder mehrerer Stufenbremsblöcke (100) unter dem Fahrzeug (400) oder dem anderen Objekt umfasst und optional ferner ein Absenken des Fahrzeugs (400) oder des anderen Objekts auf die Stufenbremsblöcke (100) umfasst.

## Revendications

1. Cale étagée (100) destinée à être utilisée dans la stabilisation d'un véhicule (400) ou d'un autre objet, la cale étagée (100) comprenant :
un premier pied (102a) et un second pied (102b) ayant une surface supérieure (111), une surface inférieure (110), une surface avant (106) et une surface arrière (107) ;
le premier pied (102a) formant une première partie de la surface supérieure (111), une première partie de la surface inférieure (110), une première partie de la surface avant (106) et une première partie de la surface arrière (107) ;
le second pied (102b) formant une seconde partie de la surface supérieure (111), une seconde partie de la surface inférieure (110), une seconde partie de la surface avant (106) et une seconde partie de la surface arrière (107) ;
une ou plusieurs charnières reliées au premier pied (102a) et au second pied (102b), les charnières étant conçues pour permettre un mouvement de rotation du premier pied (102a) par rapport au second pied (102b) de telle sorte que la cale étagée (100) définit une première configuration, dans laquelle le premier pied (102a) et le second pied (102b) sont parallèles, et une seconde configuration, dans laquelle le premier pied (102a) et le second pied (102b) forment un angle l'un par rapport à l'autre, et la cale étagée passe soit de la première configuration, soit de la seconde configuration à l'autre soit de la première configuration soit de la seconde configuration par l'intermédiaire de la rotation du premier pied (102a) et/ou du second pied (102b) par rapport à l'autre du premier pied (102a) et du second pied (102b) autour d'un axe de la ou des charnières, **caractérisé en ce que** la surface supérieure (111) comporte une série d'étages (104) augmentant en élévation le long d'une première direction à partir de la surface avant (106) vers la surface arrière (107), la série d'étages comportant une pluralité de pas et une pluralité de contremarches, chacun de la pluralité de pas étant parallèle à la surface inférieure (110) et chacun de la pluralité de pas étant dimensionné pour supporter un véhicule (400) de telle manière que seulement l'un de la pluralité de pas entre en contact avec le véhicule (400) ; et
la première partie de la surface supérieure (111) et la seconde partie de la surface supérieure (111) formant chacune des parties respectives de la série d'étages (104).

2. Cale étagée (100) selon la revendication 1, le premier pied (102a) étant à un angle de 35 degrés par rapport au second pied (102b) dans la seconde configuration.

3. Cale étagée (100) selon la revendication 1 ou 2, le premier pied (102a) et le second pied (102b) étant constitués d'aluminium.

4. Cale étagée (100) selon l'une quelconque des revendications précédentes, la première partie de la surface avant (106) et la seconde partie de la surface avant (106) étant chacune constituées d'une première section et d'une seconde section, la première section de la première partie de la surface avant (106) décalée angulairement par rapport à la seconde section de la première partie de la surface avant (106), et la première section de la seconde partie de la surface avant (106) décalée angulairement par rapport à la seconde section de la seconde partie de la surface avant (106).

5. Cale étagée (100) selon l'une quelconque des revendications précédentes, la surface supérieure (111), la surface inférieure (110), la surface avant (106) et la surface arrière (107) du premier pied (102a) et du second pied (102b) étant composées d'une accroche fabriquée avec des réceptacles pour recevoir des crampons ou des dents remplaçables.

6. Cale étagée (100) selon l'une quelconque des revendications précédentes, la surface supérieure (111) du premier pied (102a) et du second pied (102b) étant façonnée de telle sorte que lorsque le premier pied (102a) et le second pied (102b) sont parallèles, la première partie de la surface supérieure et la seconde partie de la surface supérieure forment une pluralité de motifs en forme de chevron.

7. Cale étagée (100) selon la revendication 6, lorsque le premier pied (102a) et le second pied (102b) sont décalés angulairement, une ou plusieurs de la pluralité de contremarches étant parallèles à un véhicule (400) ou à un autre objet perpendiculaire au sommet de l'angle formé par le premier pied (102a) et le second pied (102b).

8. Cale étagée (100) selon l'une quelconque des revendications précédentes, la cale étagée (100) comprenant en outre un mécanisme de liaison pivotante, le mécanisme de liaison pivotante ayant une première position et une seconde position, le mécanisme de liaison pivotante dans la première position verrouillant le premier pied (102a) et le second pied (102b) parallèle l'un à l'autre, le mécanisme de liaison pivotante dans la seconde position verrouillant le premier pied (102a) et le second pied (102b) à un angle l'un par rapport à l'autre.

9. Cale étagée (100) selon la revendication 8, le mécanisme de liaison pivotante comprenant un bras en forme de L (150), le bras en forme de L (150) ayant une partie verticale (15) et une partie horizontale et un trou à travers le bras en forme de L entre la partie verticale et la partie horizontale.

10. Procédé d'utilisation d'une cale étagée (100) lors de la stabilisation d'un véhicule (400) ou d'un autre objet, le procédé comprenant :
l'augmentation d'une hauteur du véhicule (400) ou d'un autre objet par rapport à une surface sous-jacente sur laquelle reposait le véhicule (400) ou un autre objet ; **caractérisé par** :
la fourniture d'une cale étagée (100), la cale étagée (100) comprenant un premier pied (102a) et un second pied (102b), le premier pied (102a) et le second pied (102b) ayant une surface supérieure (111), la surface supérieure (111) ayant une série d'étages (104) à différentes élévations, une surface inférieure (110), une surface avant (106) et une surface arrière (107), une ou plusieurs charnières reliées au premier pied (102a) et au second pied (102b), les charnières permettant un mouvement de rotation du premier pied (102a) par rapport au second pied (102b) autour d'un axe ; et
la rotation du premier pied (102a) par rapport au second pied (102b) autour de l'axe de telle sorte que le premier pied (102a) est angulairement décalé par rapport au second pied (102b) ; et
après augmentation de la hauteur du véhicule (400) ou d'un autre objet, le positionnement de la cale étagée (100) sous le véhicule (400) ou un autre objet de telle sorte qu'une première partie de la cale étagée (100) entre en contact avec le véhicule (400) ou un autre objet, une seconde partie de la cale étagée (100) entre en contact avec la surface sous-jacente, et l'axe coupe à la fois le véhicule (400) ou un autre objet et la surface sous-jacente.

11. Procédé selon la revendication 10, comprenant en outre :
le positionnement de la cale étagée (100) sous un véhicule (400) ou un autre objet dans une configuration, la surface inférieure (110) du premier pied (102a) et du second pied (102b) entrant en contact avec le sol, la surface supérieure (111) du premier pied (102a) et du second pied (102b) fournissant une plate-forme de prise de support pour venir en prise avec une partie du véhicule (400) ou un autre objet supportant ainsi la face inférieure du véhicule (400) ou de l'autre objet ; et/ou
le positionnement de la cale étagée sous un véhicule (400) ou un autre objet dans une configuration, la surface supérieure (111) du premier pied (102a) et du second pied (102b) entrant en contact avec le sol et la surface inférieure du premier pied (102a) et du second pied (102b) fournissant une plate-forme de prise de support pour venir en prise avec une partie du véhicule (400) ou un autre objet supportant ainsi la face inférieure du véhicule (400) ou de l'autre objet ; et/ou
le positionnement de la cale étagée sous un véhicule (400) ou un autre objet dans une configuration avec la surface arrière du premier pied (102a) et du second pied (102b) entrant en contact avec le sol et la surface avant (106) du premier pied (102a) et du second pied (102b) entrant en contact avec une partie du véhicule (400) ou un autre objet supportant ainsi la face inférieure du véhicule (400) ou de l'autre objet.

12. Procédé selon la revendication 10 ou 11, comprenant en outre la libération d'une goupille de verrouillage de position (149) d'un premier élément de maintien (147) attaché au second pied (102b), la goupille de verrouillage de position (149) fixant une liaison pivotante au premier élément de maintien (147) en place dans une première position, fixant le premier pied (102a) et le second pied (102b) en alignement parallèle.

13. Procédé selon la revendication 12, comprenant en outre la rotation de la liaison pivotante de la première position à une seconde position, la liaison pivotante dans la seconde position alignée axialement avec un second élément de maintien (143) attaché au second pied (102b), comprenant éventuellement en outre l'insertion d'une goupille de verrouillage de position (149) dans le second élément de maintien (145) attaché au second pied (102b), la goupille de verrouillage de position (149) fixant la liaison pivotante dans la seconde position au second élément de maintien (145), fixant le premier pied (102a) et le second pied (102b) à un angle.

14. Procédé destiné à la stabilisation d'un véhicule (400) ou d'un autre objet, le procédé comprenant :
l'accouplement d'un dispositif adaptateur de levier (200) à un levier (300), le levier (300) s'accouplant à un point d'appui et s'équilibrant sur celui-ci ;
le glissement du dispositif adaptateur de levier (200) sous le véhicule (200) ou un autre objet ; et
l'application d'une force à une extrémité du levier (300) provoquant le contact du dispositif adaptateur de levier (200) avec une face inférieure du véhicule (400) ou d'un autre objet, **caractérisé en ce que** le point d'appui est fixé à une cale étagée, la cale étagée (100) comprenant un premier pied (102a) et un second pied (102b), le premier pied (102a) et le second pied (102b) ayant une surface supérieure (111), la surface supérieure (111) ayant une série d'étages (104) à différentes élévations, une surface inférieure (110), une surface arrière (107) et une surface avant (106), le premier pied (102a) et le second pied (102b) formant un angle l'un par rapport à l'autre.

15. Procédé selon la revendication 14, comprenant en outre le levage du véhicule (400) ou d'un autre objet à la hauteur souhaitée, éventuellement comprenant en outre le positionnement d'une ou plusieurs cales étagées (100) sous le véhicule (400) ou un autre objet et éventuellement comprenant en outre l'abaissement du véhicule (400) ou d'un autre objet sur les cales étagée (100).
